# EUROPEAN PATENT SPECIFICATION

(11) **EP 2 505 468 B1**
(45) Date of publication and mention of the grant of the patent: **28.05.2014**
(21) Application number: 12160414.4
(22) Date of filing: 20.03.2012
(51) Int. Cl.: B62J 17/04, B62J 29/00

(54) **Windshield device for saddle-ride type vehicles**
Windschutzscheibe für Motorräder
Pare-brise pour motocyclettes

(30) Priority: 28.03.2011 JP 2011070870
(43) Date of publication of application: 03.10.2012
(73) Proprietor: Honda Motor Co., Ltd., Tokyo 107-8556 (JP)
(72) Inventor: Kawai, Kenji, Wako-shi, Saitama 351-0193 (JP); Saito, Shinobu, Wako-shi, Saitama 351-0193 (JP)
(74) Representative: Stevens, Jason Paul

(56) References cited:
- EP-A2- 1 908 676
- JP-A- 2002 029 479
- JP-U- 59 111 781

## Description

The present invention relates to a windshield device for saddle-ride type vehicles and a method of attaching the same. In particular, the present invention relates to a windshield device for saddle-ride type vehicles in which a screen is attached to a rear view mirror attachment portion.

Japanese Patent No. 3059908 discloses a windshield attachment structure which includes a support member, approximately L-shaped in side view, for supporting the back side of a windshield. The support member is made of a cylindrical rod or the like, with a vertical portion which extends approximately in the vertical direction and which has an upper end portion supporting an intermediate portion of the windshield in the vertical direction, and a lateral portion which extends forward from a lower end portion of the vertical portion and which has a front end portion supporting a lower portion of the windshield. The vertical portion and the lateral portion are formed of one continuous member, and the lateral portion is provided with an attachment seat for attaching the support member to a vehicle body and includes a bent portion laterally and outwardly protruding approximately in a squared U shape in plan view. The perimeter of the attachment seat formed of another piece of a plate shape is welded to an inner side surface of the bent portion to surround at least an outside end face and a rear-side end face of the perimeter of the attachment seat with the bent portion, and the attachment seat is also used as a side mirror attachment portion.

In an alternative design shown in Japanese Patent Application Publication No. 2008-094169 and its equivalent EP 1908676 (on which the preamble of claim 1 is based), a windshield device includes a screen and a stay for supporting the screen. The stay is formed of a resin material, and has, on one end side thereof, a support portion for supporting the screen from the front face side of the screen, and, on the other end side thereof extending below the one end side, a fixing portion to be fixed to a saddle-ride type vehicle. In this windshield device, a wide space can be provided behind a rear surface of the screen, and a user can be provided with a sense of freedom.

In the windshield attachment structure of Japanese Patent No. 3059908, reinforcement by the bent portion makes it possible to ensure the strength of the attachment seat. However, because of a structure in which the support member formed of a cylindrical rod made of iron is exposed, the cylindrical rod is prone to rusting when exposed to wind and rain, and the appearance is poor.

Moreover, in Japanese Patent Application Publication No. 2008-094169, though the design is excellent owing to the appearance of the stay, a handle cover and the stay lack a sense of unity. Further, an attaching portion is fixed to a handlebar by welding, and the fixing portion at the other end of the stay is fixed to the attaching portion. Thus, to fix the stay, a dedicated attaching portion needs to be provided in the handlebar.

On the other hand, in the case where a lower portion of a stay made of a synthetic resin is fixed to a handle cover to provide a sense of unity with the handle cover, when a force is applied to an upper portion of the stay, a load concentrates on an attachment position in the lower portion of the stay made of a synthetic resin. Accordingly, strength is needed at the attachment position.

Accordingly, in view of the above-described problems, it is an object of at least the preferred embodiment of the present invention to provide a windshield device for saddle-ride type vehicles which has excellent appearance design and in which the attachment strength of a stay made of a synthetic resin can be ensured.

According to a first aspect of the invention, there is provided a windshield device for a saddle-ride type vehicle including a screen, a screen stay for supporting the screen, and a side mirror to be attached to a handlebar. An attachment member made of metal is attached to a side mirror attachment portion of the handlebar. The side mirror is attached to the attachment member at a position away from an attachment portion for the side mirror attachment portion. The attachment member is covered with the screen stay made of a synthetic resin. Two portions of the screen stay are fixed to the attachment member, and the two portions of the screen stay match with the attachment portion for the side mirror attachment portion and the attachment portion for the side mirror.

The use of the screen stay made of a synthetic resin provides excellent appearance design. The screen stay can be attached together with the side mirror using the side mirror attachment portion. By fixing two portions of the screen stay to the attachment member made of metal, attachment strength capable of withstanding a load to be applied to the screen stay made of a synthetic resin can be ensured.

Further, with this arrangement, the screen stay can be fixed using the attachment portions for the side mirror attachment portion and the side mirror.

In a preferred form, the attachment portion for the side mirror attachment portion and the attachment portion for the side mirror are arranged approximately in a longitudinal direction of a vehicle.

Thus, although a force pushing the screen stay backward is generated when the screen is subjected to wind when the vehicle is moving, strength capable of withstanding the pushing force can be ensured by fixation on the front and back sides.

Preferably, the attachment portion for the side mirror attachment portion is an attachment-portion attachment hole drilled in the attachment member, and the attachment portion for the side mirror is a side mirror attachment hole drilled in the attachment member. With this arrangement, attachment can be performed by inserting a fastening member and the like through the attachment hole.

In a preferred form, the screen stay has a lower cover for covering a lower portion side of the attachment member. Thus, a gap between the screen stay and the handlebar side can be closed with the lower cover.

Preferably, the lower cover has an attachment portion-side locking portion to be locked to the side mirror attachment portion.

With this arrangement, the lower cover can be attached under a stay main body by locking the attachment portion-side locking portion to the side mirror attachment portion.

Preferably, the lower cover has a side mirror-side locking portion to be locked to attachment means for attaching the side mirror. Then, the lower cover can be attached using two locking portions.

According to a further aspect of the present invention, there is provided a method of attaching the windshield device for a saddle-ride type vehicle including a lower cover, including the steps of: attaching the attachment member made of the metal to the side mirror attachment portion of the handlebar; attaching the side mirror to the attachment member at the position away from the attachment portion for the side mirror attachment portion; covering the attachment member with the screen stay made of the synthetic resin and fixing the two portions of the screen stay to the attachment member; and then covering the lower portion side of the attachment member with the lower cover.

In this method of attaching the windshield device after the side mirror and the screen stay are positioned using the gap between the screen stay and the handlebar side and fixed, the gap can be closed with the lower cover.

A preferred embodiment of the invention will now be described by way of example only and with reference to the accompanying drawings, in which:
FIG. 1 is a perspective view of a front portion of a vehicle;
FIG. 2 is a perspective view of an attachment structure with a stay indicated by dashed dotted lines;
FIG. 3 is a perspective view of the attachment structure;
FIG. 4 is a perspective view of an upper part of a lower portion of the attachment structure;
FIG. 5 is a perspective view of the upper pat of the lower portion of the attachment structure with the stay indicated by dashed dotted lines;
FIG. 6 is a perspective view of a stay main body;
FIG. 7 is a bottom-side perspective view of attachment means and the stay main body;
FIG. 8 is an enlarged cross-sectional view of a fitting portion between a lower edge of the stay main body and an upper edge of a lower cover;
FIG. 9 is a perspective view of a fitting portion between the stay main body and a peripheral edge of the lower cover;
FIG. 10 is a plan view of a principal part of the lower cover;
FIG. 11 is a plan view showing a locking state of an attachment portion-side locking portion and a side mirror-side locking portion;
FIG. 12 is a perspective view of a lower portion of the stay main body attached to a side mirror attachment portion, with the side mirror attachment portion shown in cross-section; and
FIG. 13 is an exploded perspective view for explaining an attachment structure for attaching a screen to the stay.

Hereinafter, an embodiment of a windshield device for saddle-ride type vehicles such as motorcycles will be described with reference to the drawings.

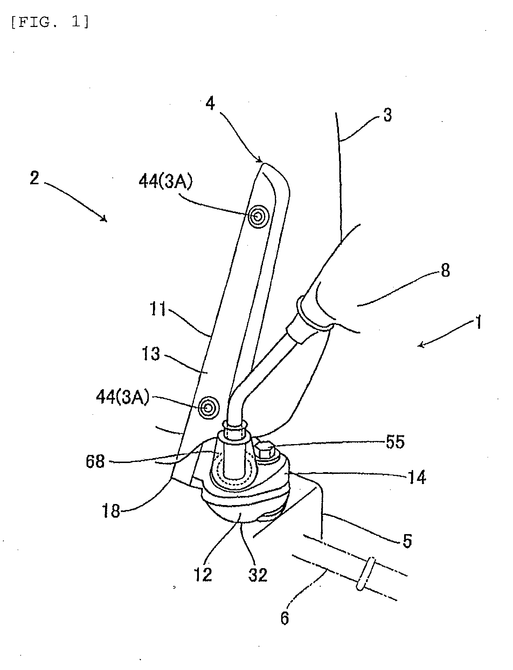

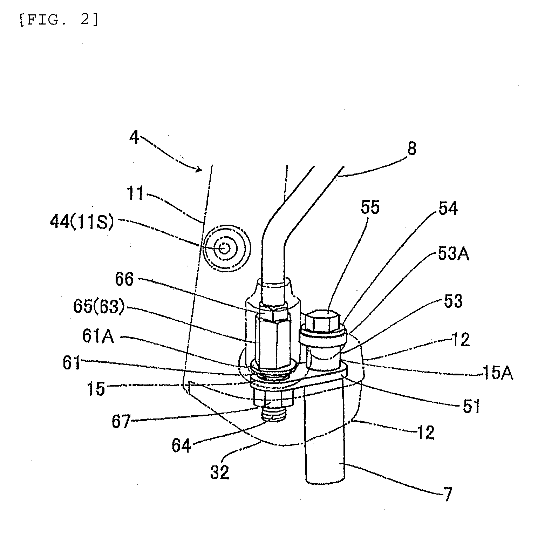

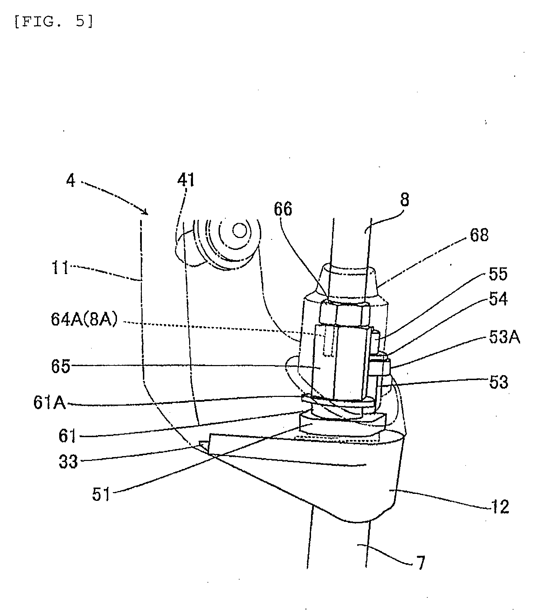

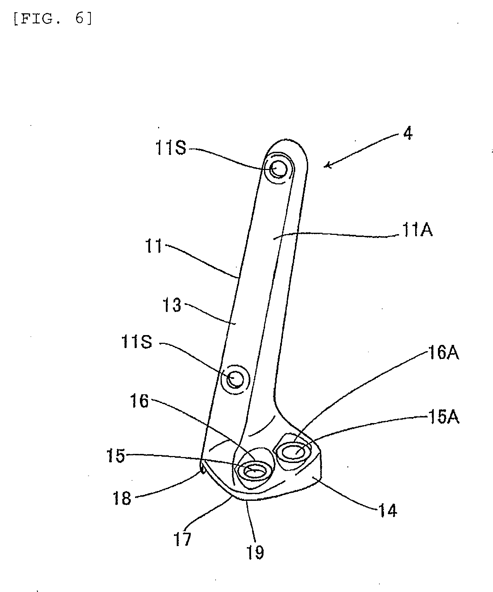

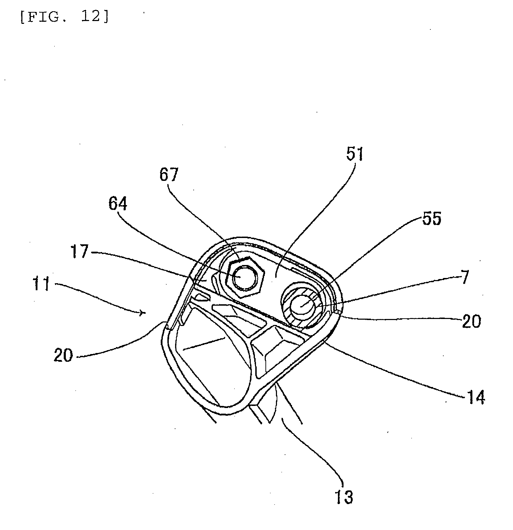

As shown in FIGS. 1 to 12, a windshield device 1 for a saddle-ride type vehicle includes a transparent screen 3 provided at a front portion of a saddle-ride type vehicle (hereinafter referred to as a vehicle) 2, and a pair of left and right screen stays (hereinafter referred to as stays) 4, 4 to which the screen 3 is attached and fixed. The windshield device 1 is configured so as to cause wind to largely pass over a head of a user during running, thus improving the comfort of a user.

In the front portion of the vehicle 2, there are provided a handle cover 5 made of a synthetic resin which is provided with a headlamp and a meter panel (not shown), a handlebar 6 having a central portion thereof covered with the handle cover 5 and having left and right ends thereof protruding from the handle cover 5, attachment tubes 7, 7, which are side mirror attachment portions made of metal and fixed to the left and right sides of the handlebar 6, left and right side mirrors 8, 8 attached to the handlebar 6 using the attachment tubes 7, 7, and the like. The screen 3 is placed above the handle cover 5.

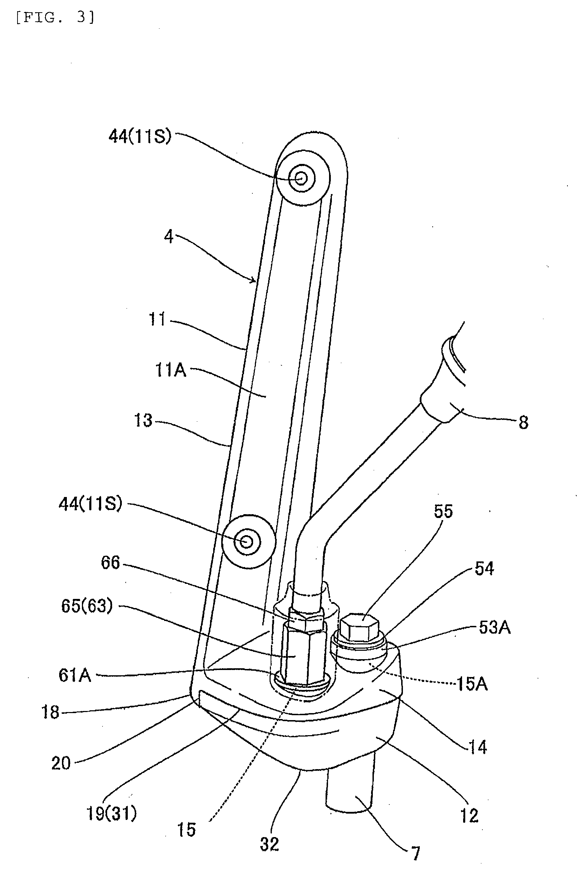

As shown in FIG. 3, the stay 4 includes a stay main body 11 made of a synthetic resin and a lower cover 12 made of a synthetic resin and provided below the stay main body 11. It should be noted that the left and right stays 4, 4 together form a left-right symmetrical shape (that is, the left and right stays are mirror images of each other).

The stay main body 11 integrally includes a hollow tubular portion 13 to which the screen 3 is fixed, and a hollow attaching portion 14 provided at a base end of the tubular portion 13, which has a larger cross-section than the tubular portion 13. The tubular portion 13 has a closed upper end and an open lower end. The attaching portion 14 is provided at a laterally outer position of the vehicle 2.

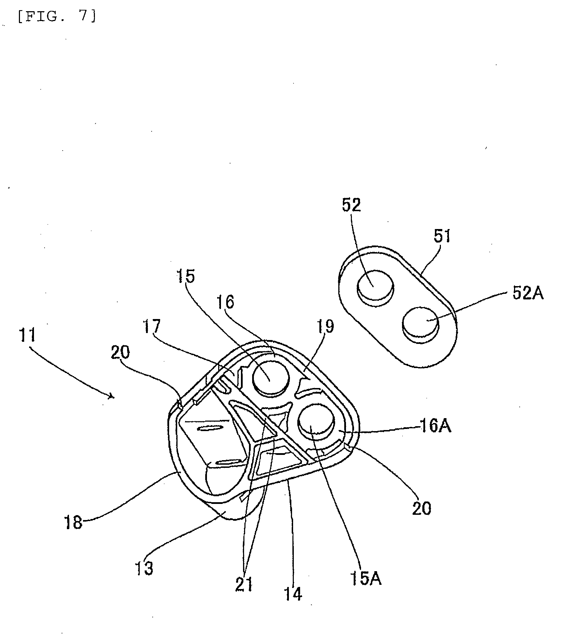

In the attaching portion 14, stay-side attachment holes 15, 15A are formed to be approximately arranged one behind the other (in the longitudinal direction of the vehicle). The stay-side attachment hole 15 at the front is formed at a lower position than the stay-side attachment hole 15A at the back. Moreover, a portion of the stay main body 11 in which the stay-side attachment hole 15 at the front exists is formed to have a larger wall thickness than other portions, and plane surfaces 16, 16A are formed around upper and lower ends of the two stay-side attachment holes 15, 15A. The plane surfaces 16, 16A are approximately horizontal in a state in which the stay 4 is attached. Further, in the attaching portion 14, a housing portion 17 for housing an attachment plate 51 made of metal, which is an attachment member, is provided under the front and back plane surfaces 16, 16A. Thus, a lower portion of the stay 4 can be reinforced by fixing the attachment plate 51 made of metal to the attaching portion 14. Moreover, in the attaching portion 14, a contact lower edge portion 18 which comes in contact with the handle cover 5 is provided on the tubular portion 13 side, and a fitting lower edge portion 19 to which the lower cover 12 is fitted is formed on the housing portion 17 side. Further, as shown in FIGS. 3, 7, and the like, step portions 20, 20 are provided on opposite sides of the fitting lower edge portion 19, and the step portions 20, 20 on the opposite sides make the fitting lower edge portion 19 a step higher than the contact lower edge portion 18. Further, inside the attaching portion 14, a plurality of reinforcing rib portions 21 are provided in intersecting directions.

The stay main body 11 and the lower cover 12 are preferably fabricated by injection moulding using a sliding mould. Alternatively, air injection, rotational moulding, blow moulding, or the like may be employed. Furthermore, the stay main body 11 has a large, hollow cross section, and therefore has light weight and high rigidity. Accordingly, for example, a synthetic resin material such as polyethylene with high versatility and recyclability can be used.

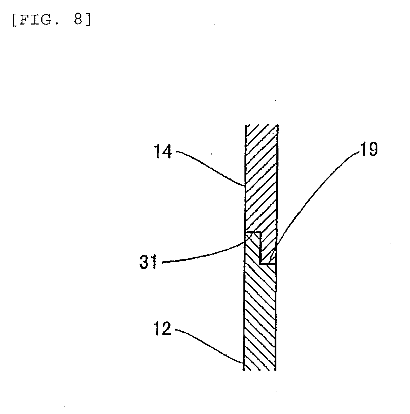

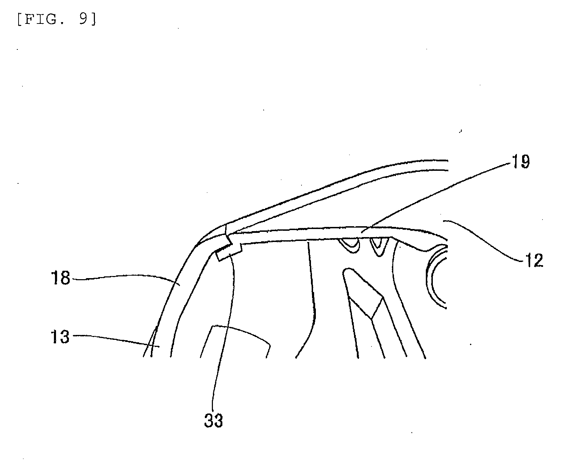

As shown in FIGS. 3 and 8, the lower cover 12 has a fitting upper edge portion 31 which is fitted to the fitting lower edge portion 19, and a lower edge portion 32 of the lower cover 12 has a shape corresponding to an upper surface of the handle cover 5. Moreover, as shown in FIG. 9, at an end portion of the lower cover 12 in the circumferential direction, a nail portion 33 which is locked to the inner surface side of the step portion 20 is provided.

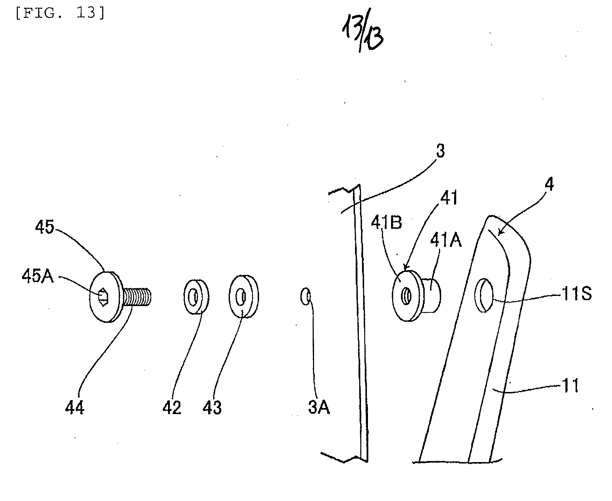

The stay main body 11 has a generally planar front face 11A. In the front face 11A, through-holes 11S formed so as to be arranged one above the other, and may be drilled. Moreover, as shown in FIG. 13, a well nut 41 and the like, which constitute fixing means, are used to fix the screen 3 to the stay 4. The well nut 41 includes a cylindrical portion 41 A and a collar portion 41 B, and the cylindrical portion 41 A has a female thread portion. By aligning the through-hole 11 S with the cylindrical portion 41 A in a state in which the cylindrical portion 41 A of the well nut 41 is inserted in the through-hole 11S, placing the collar portion 41 B between the backside of the screen 3 and the front face 11 A of the stay main body 11, inserting a bolt 44 through a hard washer 42, an elastic washer 43, and a through-hole 3A from the front side of the screen 3, and screwing the bolt 44 into the cylindrical portion 41 A, the cylindrical portion 41 A is enlarged in a collar shape in the stay main body 11. Thus, the screen 3 can be attached to and supported by the stay 4. It should be noted that the bolt 44 has a large-diameter head portion 45, called a truss head, with a hexagon socket 45A, which is a tool engaging portion.

The attachment tube 7, which is the side mirror attachment portion, has a female thread portion 7A inside. In the situation where the screen 3 is not attached, the side mirrors 8, 8 are attached directly to the left and right attachment tubes 7, 7.

On the other hand, in the situation where the screen 3 is attached, the attachment plate 51 (which is an attachment member made of metal) is attached to the attachment tube 7. The attachment plate 51 has an elliptical shape as shown in FIG. 7, and has a side mirror attachment hole 52 and a tube attachment hole 52A arranged one behind the other, the tube attachment hole 52A being an attachment-portion attachment hole. As described above, the side mirror attachment hole 52 and the tube attachment hole 52A are provided away from each other. Accordingly, the side mirror 8 on the side mirror attachment hole 52 side can be attached in a state in which the tube attachment hole 52A is fixed to the vehicle 2 side.

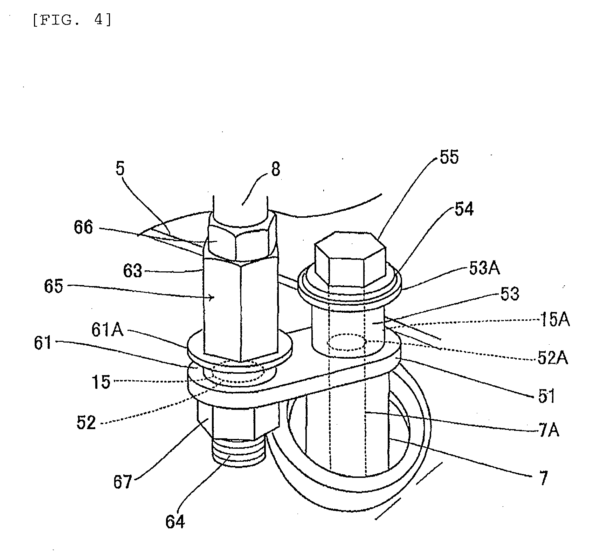

Furthermore, the tube attachment hole 52A is the attachment portion for the side mirror attachment portion attached to the attachment tube 7, and the stay-side attachment hole 15A at the back is attached to the tube attachment hole 52A. As shown in FIG. 4 and the like, at the attachment portion for the attachment tube 7, used are a collared long tube 53 having a collar portion 53A, a washer 54 to be placed on the long tube 53, and a bolt 55, which is a screw means for being screwed into the female thread portion 7A of the attachment tube 7. The long tube 53 is inserted through the stay-side attachment hole 15A at the back. It should be noted that in the case where a collared bolt having a collar portion (not shown) in a head portion thereof is used instead of the bolt 55, the washer 54 can be omitted. It should be noted that the long tube 53, the washer 54, and the bolt 55 constitute attachment means for attaching the attachment plate 51 to the attachment tube 7.

Moreover, the side mirror attachment hole 52 is the attachment portion for the side mirror 8 at which the side mirror 8 is attached, and the stay-side attachment hole 15 at the front is attached to the side mirror attachment hole 52. As shown in FIG. 4 and the like, at the attachment portion for the tube attachment hole 52A, used are a collared short tube 61 having a collar portion 61A, an adapter 65 integrally having a main body 63 and an external thread portion 64 arranged one above the other, a locking nut 66, and a nut 67 to be screwed onto the external thread portion 64 of the adapter 65 and placed under a lower surface of the attachment plate 51. The short tube 61 is inserted through the stay-side attachment hole 15 at the front. It should be noted that the short tube 61, the adapter 65, the locking nut 66, and the nut 67 constitute attachment means for attaching the side mirror 8 to the bar handle 6.

Furthermore, the length of a cylindrical portion of the long tube 53 corresponds to the length of the stay-side attachment hole 15A at the back, and the length of a cylindrical portion of the short tube 61 corresponds to the length of the stay-side attachment hole 15 at the front. The short tube 61 is shorter than the long tube 53. Moreover, the adapter 65 has a female threaded hole 63A with an open upper portion inside the main body 63 having a hexagonal prism shape. The female threaded hole 63A, the locking nut 66, and an external thread portion 8A at a lower end of the side mirror 8 are left-handed, i.e., opposite to normal.

First, one example of a procedure for attaching of the attachment plate 51 to the attachment tube 7 will be described. It should be noted that FIG. 4 is drawn with the stay 4 omitted. As shown in this drawing, in a state in which the front and back attachment holes 52, 52A of the attachment plate 51 and the front and back attachment holes 15, 15A of the stay main body 11 are aligned with each other, the attachment plate 51 is placed in the attaching portion 14 of the stay main body 11, the short tube 61 is inserted into the stay-side attachment hole 15, the external thread portion 64 of the adapter 65 is inserted through the short tube 61 and the stay-side attachment hole 15A, and the nut 67 is screwed onto a lower end of the inserted external thread portion 64. In this case, though a lower end of the short tube 61 is brought into pressure contact with an upper surface of the attachment plate 51 by fastening with the external thread portion 64, the top and bottom of the stay-side attachment hole 15 at the front are fixed by being clamped between an upper surface of the attachment plate 51 and a lower surface of the collar portion 61A. Thus, undue force is prevented from acting on the stay-side attachment hole 15. It should be noted that after the attachment plate 51 is attached to the attachment tube 7, the nut 67 and the like can be driven through a gap for attaching the lower cover 12.

Next, the long tube 53 is inserted into the stay-side attachment hole 15A at the back, and the attachment plate 51 is placed on an upper surface of the attachment tube 7 in a state in which the tube attachment hole 52A is aligned with the female thread portion 7A of the attachment tube 7. Further, the washer 54 is placed on the collar portion 53A. The bolt 55 is inserted through the washer 54, the long tube 53, and the tube attachment hole 52A, and the bolt 55 is screwed into the female thread portion 7A of the attachment tube 7. Thus, the attachment plate 51 is fixed to the attachment tube 7, and the attachment plate 51 comes to be covered with the attaching portion 14 of the stay main body 11. Moreover, in this case, a lower end of the long tube 53 is brought into pressure contact with an upper surface of the attachment plate 51 by fastening with the bolt 55. The top and bottom of the stay-side attachment hole 15A at the back are fixed by being clamped between an upper surface of the attachment plate 51 and a lower surface of the collar portion 53A. Thus, undue force is prevented from acting on the stay-side attachment hole 15A.

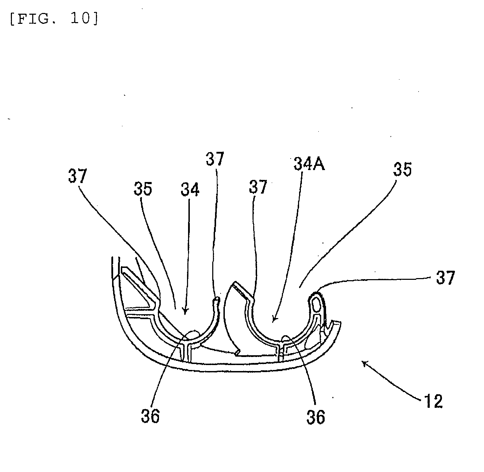

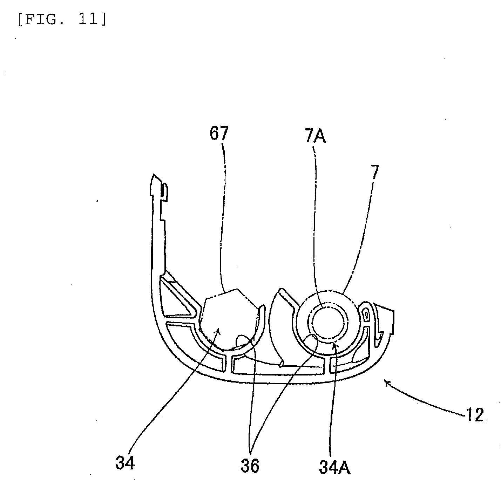

Moreover, as shown in FIGS. 10 and 11, inside the lower cover 12, elastic locking portions 34, 34A, which are locking portions that sequentially fit the nut 67 and the attachment tube 7 at the outsides thereof, are provided in front and back portions of the lower cover 12, respectively. Each of the elastic locking portions 34, 34A has a cutout arc portion 36 which is larger than a semicircle and which is obtained by providing an opening portion 35 in part of a circle. At least one of two end portions 37, 37 of the cutout arc portion 36 is formed to be a free end. It should be noted that in the design shown in FIG. 10, one end portion 37 of the elastic locking portion 34 at the front is a free end, and two end portions 37, 37 of the elastic locking portion 34A at the back are free ends.

Accordingly, by aligning the respective opening portions 35, 35 with the nut 67 and the attachment tube 7 and pushing the respective opening portions 35, 35 in, the two ends 37, 37 are elastically deformed to open, and the nut 67 and the attachment tube 7 are fitted into the respective cutout arc portions 36, 36. Moreover, in the fitting state thereof, the fitting upper edge portion 31 is fitted to the fitting lower edge portion 19, and the nail portion 33 is locked to an inner edge of the step portion 20. Thus, the lower cover 12 is attached to cover a gap between the stay main body 11 and the handle cover 5.

Moreover, the side mirror 8 has the external thread portion 8A at a lower end thereof. The locking nut 66 is screwed onto the external thread portion 8A, and the external thread portion 8A is screwed into a female thread portion 63A of the adapter 65. Thus, the side mirror 8 is fixed to the adapter 65. It should be noted that reference numeral 68 in the drawing denotes a cover member, and the collar portion 61 A, the adapter 65, and the locking nut 66 are covered with the cover member 68.

As described above, in this embodiment, in a windshield device for saddle-ride type vehicles including the screen 3, the screen stay 4 for supporting the screen 3, and the side mirror 8 to be attached to the handlebar 6, the attachment plate 51 (the attachment member made of metal) is attached to the attachment tube 7 (the side mirror attachment portion) of the handlebar 6, the side mirror 8 is attached to the attachment plate 51 at a position away from the attachment portion for the attachment tube 7, the attachment plate 51 is covered with the screen stay 4 made of a synthetic resin, and two portions of a lower portion of the screen stay 4 are fixed to the attachment plate 51. Accordingly, the use of the screen stay 4 made of a synthetic resin provides excellent appearance design. The screen stay 4 can be attached together with the side mirror 8 using the attachment tube 7. By fixing the two portions of the screen stay 4 to the attachment plate 51, attachment strength capable of withstanding a load to be applied to the screen stay 4 made of a synthetic resin can be ensured.

Moreover, in this embodiment, the two portions of the screen stay 4 match with the attachment portion for the attachment tube 7 (the side mirror attachment portion) and the attachment portion for the side mirror 8. Accordingly, the screen stay 4 can be fixed using the side mirror attachment portion and the attachment portion for the side mirror.

Moreover, in this embodiment, the attachment portion for the attachment tube 7 (the side mirror attachment portion) and the attachment portion for the side mirror 8 are arranged approximately in the longitudinal direction of the vehicle 2. Accordingly, when the screen 3 receives wind during running, a force pushing the screen stay 4 backward is generated, but strength capable of withstanding the pushing force can be ensured by fixation on the front and back sides.

Moreover, in this embodiment, the attachment portion for the attachment tube 7 (the side mirror attachment portion) is an attachment-portion attachment hole 52A drilled in the attachment plate 51 (the attachment member), and the attachment portion for the side mirror 8 is the side mirror attachment hole 52 drilled in the attachment plate 51. Accordingly, attachment can be performed by inserting fastening members and the like through the attachment holes 52, 52A.

Moreover, in this embodiment, the screen stay 4 has the lower cover 12 for covering a lower portion side of the attachment plate 51 (the attachment member). Accordingly, a gap between the screen stay 4 and the handlebar side can be closed with the lower cover 12.

Moreover, in this embodiment, the lower cover 12 has the elastic locking portion 34A (an attachment portion-side locking portion). The elastic locking portion 34A is locked to the attachment tube 7 (the side mirror attachment portion). Accordingly, the lower cover can be attached under the stay main body by locking the elastic locking portion 34A to the attachment tube 7.

Moreover, in this embodiment, the lower cover 12 has the elastic locking portion 34 (a side mirror-side locking portion). The elastic locking portion 34 is locked to the nut 67 (the attachment means for attaching the side mirror 8). Accordingly, the lower cover 12 can be attached using the two elastic locking portions 34, 34A.

Moreover, in this embodiment, a method of attaching the windshield device for saddle-ride type vehicles includes the steps of: attaching the attachment plate 51 (the attachment member made of metal), to the attachment tube 7 (the side mirror attachment portion) of the handlebar 6; attaching the side mirror 8 to the attachment plate 51 at a position away from the attachment portion for the attachment tube 7; covering the attachment plate 51 with the screen stay 4 made of a synthetic resin and fixing the two portions of the lower portion of the screen stay 4 to the attachment plate 51; and then covering the lower portion side of the attachment plate 51 with the lower cover 12. Accordingly, after the side mirror 8 and the screen stay 4 are positioned using the gap between the screen stay 4 and the handlebar side and fixed, the gap can be closed with the lower cover 12.

Effects specific to the embodiment will be described. The external thread portion 64 of the adapter 65 is inserted through the short tube 61 and the stay-side attachment hole 15A, and the nut 67 is screwed onto the lower end of the inserted external thread portion 64. Accordingly, the stay-side attachment hole 15 of the stay 4 and the adapter 65 to which the side mirror 8 is attached can be attached to the attachment plate 51 using the adapter 65, which is a common fastening means. Moreover, the bolt 55 is inserted through the washer 54, the long tube 53, and the tube attachment hole 52A, and the bolt 55 is screwed into the female thread portion 7A of the attachment tube 7. Accordingly, the attachment plate 51 and the stay-side attachment hole 15 of the stay 4 can be attached to the attachment tube 7 using the bolt 55, which is a common fastening means. Further, the side mirror-side locking portion and the attachment portion-side locking portion are the elastic locking portions 34, 34A. Accordingly, the lower cover 12 can be fixed by sequentially fitting the elastic locking portions 34, 34A to the nut 67 and the attachment tube 7 at the outsides thereof. Moreover, the nail portion 33 is provided at the end portion of the lower cover 12 in the circumferential direction, and the nail portion 33 is locked to the inner surface side of the step portion 20. Accordingly, the end portion of the lower cover 12 can be prevented from rising. Moreover, the lower cover 12 is formed such that the height thereof decreases from a central portion thereof toward the end portion thereof in the circumferential direction. Accordingly, the lower cover 12 can be easily fitted into the gap between the attaching portion 14 and the handle cover 5.

It should be noted that the present invention is not limited to this embodiment, and various modifications can be made without departing from the frame of the appended claims. For example, the shape of the tubular portion of the screen stay can be appropriately selected.

## Claims

1. A windshield device (1) for a saddle-ride type vehicle (2), comprising:
a screen (3);
a screen stay (4) for supporting the screen (3); and
a side mirror (8) to be attached to a handlebar (6),
wherein an attachment member (51) made of metal is attached to a side mirror attachment portion (7) of the handlebar (6),
the attachment member (51) is covered with the screen stay (4) made of a synthetic resin, and
two portions (15, 15A) of the screen stay (4) are fixed to the attachment member (51);
**characterized in that** the side mirror (8) is attached to the attachment member (51) at a position away from an attachment portion for the side mirror attachment portion (7),
and the two portions (15, 15A) of the screen stay (4) match with the attachment portion for the side mirror attachment portion (7) and an attachment portion for the side mirror (8).

2. The windshield device for a saddle-ride type vehicle according to claim 1, wherein the attachment portion for the side mirror attachment portion (7) and the attachment portion for the side mirror (8) are arranged approximately in a longitudinal direction of a vehicle (2).

3. The windshield device for a saddle-ride type vehicle according to claim 1 or claim 2, wherein the attachment portion for the side mirror attachment portion (7) is an attachment-portion attachment hole (52A) formed in the attachment member (51), and the attachment portion for the side mirror (8) is a side mirror attachment hole (52) formed in the attachment member (51).

4. The windshield device for a saddle-ride type vehicle according to any one of claims 1 to 3, wherein the screen stay (4) has a lower cover (12) for covering a lower portion side of the attachment member (51).

5. The windshield device for saddle-ride type vehicles according to claim 4, wherein the lower cover (12) has an attachment portion-side locking portion (34A) to be locked to the side mirror attachment portion (7).

6. The windshield device for saddle-ride type vehicles according to claim 4 or claim 5, wherein the lower cover (12) has a side mirror-side locking portion (34) to be locked to attachment means (67) for attaching the side mirror (8).

7. A method of attaching the windshield device for a saddle-ride type vehicle according to any one of claims 4 to 6, comprising:
attaching the attachment member (51) made of metal to the side mirror attachment portion (7) of the handlebar (8);
attaching the side mirror (8) to the attachment member (51) at the position away from the attachment portion for the side mirror attachment portion (7);
covering the attachment member (51) with the screen stay (4) made of synthetic resin and fixing the two portions of the screen stay (4) to the attachment member (51); and then
covering the lower portion side of the attachment member (51) with the lower cover (12).

## Patentansprüche

1. Windabschirmvorrichtung (1) für ein Fahrzeug vom Sattelfahrtyp (2), umfassend:
eine Scheibe (3);
eine Scheibenhalterung (4) zum Abstützen der Scheibe (3); und
einen an einem Lenker (6) anzubringenden Seitenspiegel (8),
wobei ein Anbringungsglied (51), das aus Metall gefertigt ist, an einem Seitenspiegelbefestigungsbereich (7) des Lenkers (6) angebracht ist,
das Anbringungsglied (51) mit der Scheibenhalterung (4), die aus einem Kunstharz gefertigt ist, abgedeckt ist, und
zwei Bereiche (15, 15A) der Scheibenhalterung (4) am Anbringungsglied (51) befestigt sind;
**dadurch gekennzeichnet, dass** der Seitenspiegel (8) am Anbringungsglied (51) an einer Stelle, die von einem Anbringungsbereich für den Seitenspiegelanbringungsbereich (7) entfernt ist, angebracht ist,
und die zwei Bereiche (15, 15A) der Scheibenhalterung (4) mit dem Anbringungsbereich für den Seitenspiegelanbringungsbereich (7) und einem Anbringungsbereich für den Seitenspiegel (8) übereinstimmen.

2. Windabschirmvorrichtung für ein Fahrzeug vom Sattelfahrtyp gemäß Anspruch 1, bei der der Anbringungsbereich für den Seitenspiegelanbringungsbereich (7) und der Anbringungsbereich für den Seitenspiegel (8) ungefähr in einer Längsrichtung eines Fahrzeugs (2) angeordnet sind.

3. Windabschirmvorrichtung für ein Fahrzeug vom Sattelfahrtyp gemäß Anspruch 1 oder 2, bei der der Anbringungsbereich für den Seitenspiegelanbringungsbereich (7) ein Anbringungsbereichanbringungsloch (52A) ist, das in dem Anbringungsglied (51) gebildet ist, und der Anbringungsbereich für den Seitenspiegel (8) ein Seitenspiegelanbringungsloch (52) ist, das in dem Anbringungsglied (51) gebildet ist.

4. Windabschirmvorrichtung für ein Fahrzeug vom Sattelfahrtyp gemäß einem der Ansprüche 1 bis 3, bei der die Scheibenhalterung (4) eine untere Abdeckung (12) umfasst, um eine untere Bereichsseite des Anbringungsglieds (51) abzudecken.

5. Windabschirmvorrichtung für ein Fahrzeug vom Sattelfahrtyp gemäß Anspruch 4, bei der die untere Abdeckung (12) einen anbringungsbereichsseitigen Verriegelungsbereich (34A) zum Verriegeln am Seitenspiegelanbringungsbereich (7) aufweist.

6. Windabschirmvorrichtung für ein Fahrzeug vom Sattelfahrtyp gemäß Anspruch 4 oder 5, bei der die untere Abdeckung (12) einen seitenspiegelseitigen Verriegelungsbereich (34) zum Verriegeln an Anbringungsmitteln (67) zum Anbringen des Seitenspiegels (8) aufweist.

7. Verfahren zum Anbringen der Windabschirmvorrichtung für ein Fahrzeug vom Sattelfahrtyp gemäß einem der Ansprüche 4 bis 6, umfassend:
Anbringen des Anbringungsglieds (51), das aus Metall gefertigt ist, am Seitenspiegelanbringungsbereich (7) des Lenkers (8);
Anbringen des Seitenspiegels (8) am Anbringungsglied (51) an der Stelle, die entfernt vom Anbringungsbereich für den Seitenspiegelanbringungsbereich (7) ist;
Abdecken des Anbringungsgliedes (51) mit der Scheibenhalterung (4), die aus einem Kunstharz gefertigt ist, und Befestigen der beiden Bereiche der Scheibenhalterung (4) am Anbringungsglied (51); und dann
Abdecken der unteren Bereichsseite des Anbringungsglieds (51) mit der unteren Abdeckung (12).

## Revendications

1. Pare-brise (1) pour un véhicule (2) du type motocyclette, comprenant :
un blindage (3) ;
un support de blindage (4) pour supporter le blindage (3) ; et
un miroir latéral (8) à fixer à une manette (6),
dans lequel un élément de fixation (51) constitué de métal est fixé à une portion de fixation de miroir latéral (7) de la manette (6),
l'élément de fixation (51) est recouvert du support de blindage (4) constitué d'une résine synthétique, et
deux portions (15, 15A) du support de blindage (4) sont fixées à l'élément de fixation (51) ;
**caractérisé en ce que** le miroir latéral (8) est fixé à l'élément de fixation (51) dans une position distante d'une portion de fixation pour la portion de fixation de miroir latéral (7), et
les deux portions (15, 15A) du support de blindage (4) s'ajustent à la portion de fixation pour la portion de fixation de miroir latéral (7) et à une portion de fixation pour le miroir latéral (8).

2. Pare-brise pour un véhicule du type motocyclette selon la revendication 1, dans lequel la portion de fixation pour la portion de fixation de miroir latéral (7) et la portion de fixation pour le miroir latéral (8) sont approximativement aménagées dans la direction longitudinale d'un véhicule (2).

3. Pare-brise pour un véhicule du type motocyclette selon la revendication 1 ou la revendication 2, dans lequel la portion de fixation pour la portion de fixation de miroir latéral (7) est un trou de fixation de portion de fixation (52A) formé dans l'élément de fixation (51) et la portion de fixation pour le miroir latéral (8) est un trou de fixation de miroir latéral (52) formé dans l'élément de fixation (51).

4. Pare-brise pour un véhicule du type motocyclette selon l'une quelconque des revendications 1 à 3, dans lequel le support de blindage (4) a un couvercle inférieur (12) pour recouvrir un côté de portion inférieure de l'élément de fixation (51).

5. Pare-brise pour véhicules du type motocyclette selon la revendication 4, dans lequel le couvercle inférieur (12) a une portion de blocage côté portion de fixation (34A) à bloquer sur la portion de fixation de miroir latéral (7).

6. Pare-brise pour véhicule du type motocyclette selon la revendication 4 ou la revendication 5, dans lequel le couvercle inférieur (12) a une portion de verrouillage côté miroir latéral (34) à bloquer sur l'élément de fixation (67) pour fixer le miroir latéral (8).

7. Procédé de fixation du pare-brise pour un véhicule du type motocyclette selon l'une quelconque des revendications 4 à 6, comprenant les étapes consistant à :
fixer l'élément de fixation (51) constitué de métal à la portion de fixation de miroir latéral (7) de la manette (8) ;
fixer le miroir latéral (8) à l'élément de fixation (51) dans la position distante de la portion de fixation de la portion de fixation de miroir latéral (7) ;
couvrir l'élément de fixation (51) avec le support de blindage (4) constitué de résine synthétique et fixer les deux portions du support de blindage (4) à l'élément de fixation (51) ; et ensuite
couvrir le côté de portion inférieure de l'élément de fixation (51) au couvercle inférieur (12).
